(19) Europäisches Patentamt / European Patent Office / Office européen des brevets

(11) **EP 3 481 792 B1**

(12) **EUROPÄISCHE PATENTSCHRIFT**

(45) Veröffentlichungstag und Bekanntmachung des Hinweises auf die Patenterteilung:
**28.09.2022 Patentblatt 2022/39**

(21) Anmeldenummer: **17735580.7**

(22) Anmeldetag: **10.07.2017**

(51) Internationale Patentklassifikation (IPC):
**C06C 7/00** (2006.01)    **C06C 9/00** (2006.01)
**C06B 43/00** (2006.01)    **C06B 41/00** (2006.01)

(52) Gemeinsame Patentklassifikation (CPC):
**C06C 7/00; C06B 41/00; C06B 43/00; C06C 9/00**

(86) Internationale Anmeldenummer:
**PCT/EP2017/067249**

(87) Internationale Veröffentlichungsnummer:
**WO 2018/011134 (18.01.2018 Gazette 2018/03)**

(54) **BLEIFREIE ZÜNDSTOFFE ODER ZÜNDSTOFFMISCHUNGEN**

LEAD-FREE INITIATING AGENTS OR INITIATING AGENT MIXTURES

EXPLOSIF D'AMORÇAGE OU MÉLANGE D'EXPLOSIFS D'AMORÇAGE SANS PLOMB

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2016 EP 16178863**

(43) Veröffentlichungstag der Anmeldung:
**15.05.2019 Patentblatt 2019/20**

(73) Patentinhaber: **Dynitec GmbH**
**53840 Troisdorf (DE)**

(72) Erfinder:
- ZÖLLNER, Helmut
  40670 Meerbusch (DE)
- JOAS, Manuel
  53229 Bonn (DE)
- SCHIRRA, Rainer
  53797 Lohmar (DE)
- KAPLAN, Kemal
  53840 Troisdorf (DE)

(74) Vertreter: **Meissner Bolte Partnerschaft mbB et al**
**Kaiserswerther Straße 183**
**40474 Düsseldorf (DE)**

(56) Entgegenhaltungen:
EP-A2- 2 450 329    EP-A2- 2 450 330
WO-A1-2015/067228    US-A1- 2008 200 688

- PEI-PEI LIU ET AL: "Toward Tuning the Bulk Magnetic Behaviors of Metal-Azido Materials by Organic Pillars", CHEMISTRY OF MATERIALS, vol. 19, no. 11, 1 May 2007 (2007-05-01), pages 2724-2726, XP055516369, ISSN: 0897-4756, DOI: 10.1021/cm0708416
- Pei-Pei Liu ET AL: "Supporting Information Towards tuning the bulk magnetic behaviors of metal-azido materials by organic pillars", , 11 May 2007 (2007-05-11), XP055665296, Retrieved from the Internet: URL:https://pubs.acs.org/doi/suppl/10.1021/cm0708416/suppl_file/cm0708416si20070424_102528.pdf [retrieved on 2020-02-05]
- JIA-CHENG LIU ET AL: "Linear trinuclear and one-dimensional copper(II) complexes containing co-bridging end-on azido and triazole ligands. Crystal structures and magnetic properties of [Cu 3 (atrz) 2 (N 3 ) 6 ] and [Cu(atrz) 2 (N 3 )]NO 3 (atrz ??? 4-amino-1,2,4-triazole)", J. CHEM. SOC. DALTON TRANS, 1 January 1999 (1999-01-01), pages 2337-2342, XP055665304,

**Beschreibung**

Die Erfindung betrifft bleifreie Zündstoffe oder bleifreie Zündstoffmischungen und Zünd- und Anzündmittel, die die bleifreien Zündstoffe oder bleifreie Zündstoffmischungen enthalten.

Zündstoffe und Zündstoffmischungen detonieren bereits in geringer Menge nach Auslösung einer chemischen Reaktion. Die Auslösung der chemischen Reaktion kann mechanisch, elektrisch, oder thermisch erfolgen. Die Zündstoffe und Zündstoffmischungen reagieren dabei in Zünd- und Anzündmitteln (Zündladung bzw. Anzündsatz) mit angemessener Empfindlichkeit auf den externen mechanischen, elektrischen oder thermischen Impuls. In Zündmitteln dienen sie außerdem als Initialladung zur Erzeugung einer Detonation, welche kräftig genug ist die Ausgangsladung zu initiieren. Zündstoffe werden schon seit über einhundert Jahren für die Zündung von Sekundärsprengstoffen (wie z. B. Hexogen und Nitropenta) verwendet.

An einen Zündstoff oder eine Zündstoffmischung werden bestimmte Anforderungen gestellt:

Initiierungsvermögen: Der Zündstoff oder die Zündstoffmischung muss für die Verwendung in militärischen Detonatoren bereits in einer Menge von weniger als 100 mg in der Lage sein, zuverlässig einen Sekundärsprengstoff zu zünden.

Thermische Stabilität: Der Zündstoff oder die Zündstoffmischung muss eine entsprechende thermische Stabilität besitzen, um nach Lagerung in einem Temperaturbereich von mindestens -54 °C bis mindestens +71 °C seine Funktionalität beizubehalten.

Empfindlichkeit: Der Zündstoff oder die Zündstoffmischung muss ausreichend empfindlich sein, um durch einen mechanischen, elektrischen oder thermischen Impuls ausgelöst zu werden, muss aber zugleich so unempfindlich sein, dass eine Herstellung/Handhabung unter Sicherheit möglich ist und keine ungewollte spontane Auslösung des Zündstoffs oder der Zündstoffmischung erfolgt.

Kompatibilität: Der Zündstoff oder die Zündstoffmischung muss mit gängigen Explosivstoffen sowie nicht explosiven Stoffen und Werkstoffen, wie sie in Zünd- und Anzündmitteln vorkommen, verträglich sein.

Derzeit werden typischerweise Bleiazid, Bleistyphnat und Bleipikrat als Zündstoffe oder Zündstoffmischungen verwendet. Diese Stoffe befinden sich allerdings seit Ende 2011 auf der Kandidatenliste der besonders besorgniserregenden Stoffe (SVHC) der Verordnung (EG) Nr. 1907/2006 (REACH) und drohen demnächst zulassungspflichtig zu werden, weshalb neue Zündstoffe oder Zündstoffmischungen benötigt werden, welche nicht auf den oben genannten Verbindungen basieren bzw. allgemein kein Blei enthalten.

Als Stand der Technik können folgende Dokumente genannt werden, welche explosive Übergangsmetallkomplexe offenbaren:
US 2008/200688 A1; EP 2 450 329 A2; EP 2 450 330 A2; WO 2015/067228 A1; pei-Pei Liu et al.: "Toward Tuning the Bulk Magnetic Behaviors of Metal-Azido Materials by Organic Pillars" Chem. Mater. 2007, 19, 2724-2726; Pei Liu et al.: "Supporting Information - Towards tuning the bulk magnetic behaviors of metal-azido materials by Organic Pillars" als Zusatz zu Chem. Mater. 2007, 19, 2724-2726; Jia-Cheng Liu et al.: "Linear trinuclear and one-dimensional copper (II) complexes containing co-bridging end- on azido and triazole ligands. Crystal structures and magnetic properties of [Cu3(atrz)2(N3)6] and [Cu(atrz)2(N3)]NO3 (atrz = 4-amino-1,2,4-triazole)", J. Chem. Soc, Dalton trans., 1999, 2337-2342.

Die Aufgabe der vorliegenden Erfindung war deshalb die Bereitstellung bleifreier Zündstoffe oder Zündstoffmischungen, welche die oben genannten Anforderungen erfüllen, für Zünd- und Anzündmittel, welche dem bisherigen Aufbau von Zünd- und Anzündmitteln entsprechen und die geforderte Funktionalität innerhalb einer Zündkette aufweisen.

Die Aufgabe wird durch die Zündstoffe des vorliegenden Anspruchs 1 sowie die Verwendung gemäß Anspruch 5 gelöst. Bevorzugte Ausführungsformen sind in den Unteransprüchen angegeben.

Primäre Zündmittel wandeln den externen Impuls in eine chemische, detonative Reaktion um und besitzen typischerweise einen dreistufigen Aufbau. Die erste Ladung wird als Zündladung, die zweite Ladung als Initialladung und die dritte Ladung als Ausgangsladung bezeichnet. Die Zündladung enthält im Allgemeinen eine Zündstoffmischung aus Bleiazid und Bleistyphnat sowie weitere explosive und nicht explosive Zusätze. Die Initialladung enthält im Allgemeinen den Zündstoff Bleiazid. Die Ausgangsladung besteht im Allgemeinen aus einem leicht initiierbaren Sekundärsprengstoff wie Nitropenta oder Hexogen.

Primäre Anzündmittel wandeln den externen Impuls in eine chemische, deflagrative Reaktion um und besitzen im Allgemeinen einen ein- bis dreistufigen Aufbau und werden ja nach Bauart als Anzündstücke oder Anzündpillen bezeichnet, wobei der den Zündstoff / das Zündstoffgemisch enthaltende Teil als Anzündsatz bezeichnet wird.

Der bleifreie Zündstoff oder die bleifreie Zündstoffmischung kann in den mechanisch, elektrisch oder thermisch ausgelösten Zündmitteln bzw. Anzündmitteln sowohl in der Zündladung oder dem Anzündsatz wie auch in der Initialladung als Ersatz für Bleiazid, Bleistyphnat und Bleipikrat eingesetzt werden.

Die erfindungsgemäßen bleifreien Zündstoffe umfassen Übergangsmetallkomplexe der allgemeinen Formel

$$[\text{Zentralmetall}(\text{Azido})_{1-3}(\text{energetischer Ligand})_{0,5-3}]_n.$$

Der Index $n$ in der vorstehenden Formel meint, dass nicht nur die grundlegenden Komplexe mit einem Zentralmetallatom, sondern auch polykoordinierte Komplexe bzw. mehrkernige Komplexe umfasst sein sollen, bspw.

$$[(\text{Zentralmetall})_2(\text{Azido})_4(\text{energetischer Ligand})]$$

mit $n = 2$, oder

$$[(\text{Zentralmetall})_3(\text{Azido})_6(\text{energetischer Ligand})_2]$$

mit $n = 3$.

Durch die Vielzahl an möglichen polykoordinierten Komplexen und damit einhergehend einer Vielzahl an möglichen Werten für den Index $n$, wäre eine entsprechende Angabe eines Bereiches für den Index $n$ eine unzumutbare Einschränkung des erfindungsgemäßen Gegenstands. Insbesondere da eine Bestimmung des Koordinationsgrads bzw. der Anzahl der Zentralmetallatome im polykoordinierten Komplex schwierig ist.

Allgemein ließe sich die Formel immer auf die allgemeine Formel

$$[\text{Zentralmetall}(\text{Azido})_{1-3}(\text{energetischer Ligand})_{0,5-3}]$$

herunterkürzen, indem man den jeweiligen Wert des Index $n$ ausklammert.

In einer bevorzugten Ausführungsform bestehen die bleifreien Zündstoffe der vorliegenden Erfindung ausschließlich aus den genannten Übergangsmetallkomplexen.

Das Zentralmetall des vorstehenden Übergangsmetallkomplexes kann aus der Gruppe der 3d- oder 4d-Übergangsmetalle, bevorzugt Mangan, Eisen, Nickel, Kupfer, Zink oder Silber, ausgewählt sein. Die einzelnen Metalle können in verschiedenen Oxidationsstufen vorliegen, sind durch die vorliegende Erfindung aber umfasst.

Der energetische Ligand des vorstehenden Übergangsmetallkomplexes wird ausgewählt aus der Gruppe, bestehend aus 3-Amino-1-nitroguanidin, 4-Amino-3-hydrazino-1,2,4-triazol, 3-Hydrazino-1-methyl-1,2,4-triazol, 1-Methyl-1,2,4-triazol, 4-Methyl-1,2,4-triazol, 3-Amino-1-methyl-1,2,4-triazol, 3-Amino-2-methyl-1,2,4-triazol, 4,4'-Bis-1,2,4-triazol, 1,1'-Carbonyl-bis-1,2,4-triazol, 1-Methyltetrazol, 2-Methyltetrazol, 1-Methyl-5-aminotetrazol, 2-Methyl-5-aminotetrazol, 1,5-Diaminotetrazol, 1-Methyl-5-nitrotetrazol, 2-Methyl-5-nitrotetrazol, 5-Cyano-1-methyltetrazol, 5-Cyano-2-methyltetrazol, 5-Chloro-1-methyltetrazol, 5-Chloro-2-methyltetrazol, 1-Methyl-5-(1-methylhydrazinyl)tetrazol, 1,2-Bis[5-(1-methylhydrazinyl)tetrazol-1-yl]ethan, 1,2-Bis[5-(1-methylhydrazinyl)tetrazol-1-yl]propan, 1,4-Bis[5-(1-methylhydrazinyl)tetrazol-1-yl]butan, 5,5'-Bis(1-methyltetrazol), 5,5'-Bis(2-methyltetrazol), 1,2-Di(tetrazol-1-yl)propan, Tris(2-(tetrazol-1-yl)ethyl)amin, 1,1'-Bis(1-methyltetrazol-5-yl)methan, 1,2-Bis(1-methyltetrazol-5-yl)ethan, 1,2-Bis(5-aminotetrazol-1-yl)ethan, 1,3-Bis(5-aminotetrazol-1-yl)propan, 1,4-Bis(5-aminotetrazol-1-yl)butan, 2-Methyl-5-(tetrazol-1-yl)tetrazol, 1-(5-amino-1-methyl-1,2,4-triazol-3-yl)tetrazol, 5,5'-Diamino-1,1'-dimethyl-3,3'-bis(1,2,4-triazol), 1,1'-Dimethyl-3,3'-bis-1,2,4-triazol, 1,1'-Bis(2-methyltetrazol-5-yl)amin, 1-Methyl-1,1'-bis(2-methyltetrazol-5-yl)amin, 1,1'-Di(1,2,4-triazol-1-yl)methan oder 1,1'-Di(1,2,4-triazol-1-yl)methanimin.

Als energetische Liganden sind bevorzugt 3-Amino-1-nitroguanidin, 4-Amino-3-hydrazino-1,2,4-triazol, 3-Hydrazino-1-methyl-1,2,4-triazol, 1-Methyl-1,2,4-triazol, 3-Amino-1-methyl-1,2,4-triazol, 4,4'-Bis-1,2,4-triazol, 1-Methyltetrazol, 2-Methyltetrazol, 1-Methyl-5-aminotetrazol, 2-Methyl-5-aminotetrazol, 2-Methyl-5-nitrotetrazol, 5-Cyano-2-methyltetrazol, 1-Methyl-5-(1-methylhydrazinyl)tetrazol, 1,2-Bis[5-(1-methylhydrazinyl)tetrazol-1-yl]ethan, 5,5'-Bis(2-methyltetrazol), 1,2-Di(tetrazol-1-yl)propan, Tris(2-(tetrazol-1-yl)ethyl)amin, 2-Methyl-5-(tetrazol-1-yl)tetrazol, 1,1'-Dimethyl-3,3'-bis-1,2,4-triazol, 1-Methyl-1,1'-bis(2-methyltetrazol-5-yl)amin oder 1,1'-Di(1,2,4-triazol-1-yl)methanimin.

Die erfindungsgemäßen Zündstoffe oder Zündstoffmischungen zeichnen sich durch eine gute thermische Stabilität, eine angemessene Empfindlichkeit sowie ein gutes Initiierungsvermögen aus. Zudem enthalten die Zündstoffe/Zündstoffmischungen nur bleifreie Bestandteile.

Die oben beschriebenen Übergangsmetallkomplexe weisen Zersetzungstemperaturen von mindestens 100 °C auf. Die mechanischen Empfindlichkeiten liegen in für Primärsprengstoffe typischen Bereichen: Reibempfindlichkeit von < 80 N und Schlagempfindlichkeit von < 3,0 J nach BAM-Methoden. Des Weiteren besitzen die oben genannten Übergangsmetallkomplexe ein gutes Initiierungsvermögen; so sind weniger als 100 mg des Übergangsmetallkomplexes ausreichend, um einen gängigen Sekundärsprengstoff zu zünden. Die oben beschriebenen Übergangsmetallkomplexe sind zudem untereinander, mit gängigen Explosivstoffen (z. B. Tetrazen, Nitropenta und Hexogen) sowie nicht explosiven Stoffen, wie sie in gängigen Zünd- und Anzündmitteln vorkommen (z. B. Antimon(III)-sulfid, Barium(II)-nitrat), kompatibel.

Weiterhin wurde im Rahmen der vorliegenden Erfindung die Verwendung von Übergangsmetallkomplexen der folgenden Formel

$$[\text{Zentralmetall(Azido)}_{1\text{-}3}(\text{energetischer Ligand})_{0,5\text{-}3}]_n,$$

wobei

der energetische Ligand aus der Gruppe, bestehend aus 3-Amino-1-nitroguanidin, 4-Amino-3-hydrazino-1,2,4-triazol, 3-Hydrazino-1-methyl-1,2,4-triazol, 1-Methyl-1,2,4-triazol, 4-Methyl-1,2,4-triazol, 3-Amino-1-methyl-1,2,4-triazol, 3-Amino-2-methyl-1,2,4-triazol, 4-Amino-1,2,4-triazol, 4,4'-Bis-1,2,4-triazol, 1,1'-Carbonyl-bis-1,2,4-triazol, 1-Methyltetrazol, 2-Methyltetrazol, 1-Methyl-5-aminotetrazol, 2-Methyl-5-aminotetrazol, 1,5-Diaminotetrazol, 1-Methyl-5-nitrotetrazol, 2-Methyl-5-nitrotetrazol, 5-Cyano-1-methyltetrazol, 5-Cyano-2-methyltetrazol, 5-Chloro-1-methyltetrazol, 5-Chloro-2-methyltetrazol, 1-Methyl-5-(1-methylhydrazinyl)tetrazol, 1,2-Bis[5-(1-methylhydrazinyl)tetrazol-1-yl]ethan, 1,2-Bis[5-(1-methylhydrazinyl)tetrazol-1-yl]propan, 1,4-Bis[5-(1-methylhydrazinyl)tetrazol-1-yl]butan, 5,5'-Bis(1-methyltetrazol), 5,5'-Bis(2-methyltetrazol), 1,2-Di(tetrazol-1-yl)ethan, 1,2-Di(tetrazol-1-yl)propan,1,4-Di(tetrazol-1-yl)butan, Tris(2-(tetrazol-1-yl)ethyl)amin, 1,1'-Bis(1-methyltetrazol-5-yl)methan, 1,2-Bis(1-methyltetrazol-5-yl)ethan, 1,2-Bis(5-aminotetrazol-1-yl)ethan, 1,3-Bis(5-aminotetrazol-1-yl)propan, 1,4-Bis(5-aminotetrazol-1-yl)butan, 2-Methyl-5-(tetrazol-1-yl)tetrazol, 1-(5-amino-1-methyl-1,2,4-triazol-3-yl)tetrazol, 5,5'-Diamino-1,1'-dimethyl-3,3'-bis(1,2,4-triazol), 1,1'-Dimethyl-3,3'-bis-1,2,4-triazol, 1,1'-Bis(2-methyltetrazol-5-yl)amin, 1-Methyl-1,1'-bis(2-methyltetrazol-5-yl)amin, 1,1'-Di(1,2,4-triazol-1-yl)methan oder 1,1'-Di(1,2,4-triazol-1-yl)methanimin ausgewählt ist,

als bleifreier Zündstoff, oder in bleifreien Zündstoffen oder bleifreien Zündstoffmischungen, in Zündmitteln, in Anzündmitteln gefunden, wobei das Zentralmetall bevorzugt aus der Gruppe der 3d- oder 4d-Übergangsmetalle, bevorzugt Mangan, Eisen, Nickel, Kupfer, Zink oder Silber, ausgewählt ist.

Beispiel:

Kupfer(II)-sulfat-pentahydrat und 1,2-Di(tetrazol-1-yl)ethan werden in einer Mischung aus Wasser und Ethanol bei 75 °C unter Rühren gelöst. Natriumazid wird in einer Mischung aus Wasser und Ethanol gelöst und langsam unter Rühren zur 75 °C warmen Reaktionslösung zugetropft. Nach vollständiger Zugabe wird die gesamte Lösung abgekühlt und der erhaltene Feststoff abgesaugt und mit Wasser und Ethanol gewaschen. Das erhaltene Produkt Poly{Tetraazido-di(tetrazol-1-yl)ethan-dikupfer(II)} wird unter Vakuum getrocknet.

Poly{Tetraazido-di(tetrazol-1-yl)ethan-dikupfer(II)} zersetzt sich bei 195 °C und weist eine Reibempfindlichkeit von 0,1 N (BAM-Methode) sowie eine Schlagempfindlichkeit von 2,0 J (BAM-Methode) auf. 20 mg Poly{Tetraazido-di(tetrazol-1-yl)ethan-dikupfer(II)} sind in der Lage, Nitropenta zuverlässig zu initiieren.

**Patentansprüche**

1.  Bleifreier Zündstoff oder bleifreie Zündstoffmischung umfassend einen oder mehrere Übergangsmetallkomplexe der folgenden Formel

$$[\text{Zentralmetall(Azido)}_{1\text{-}3}(\text{energetischer Ligand})_{0,5\text{-}3}]_n,$$

    **dadurch gekennzeichnet, dass**
    der energetische Ligand aus der Gruppe, bestehend aus 3-Amino-1-nitroguanidin, 4-Amino-3-hydrazino-1,2,4-triazol, 3-Hydrazino-1-methyl-1,2,4-triazol, 1-Methyl-1,2,4-triazol, 4-Methyl-1,2,4-triazol, 3-Amino-1-methyl-1,2,4-triazol, 3-Amino-2-methyl-1,2,4-triazol, 4,4'-Bis-1,2,4-triazol, 1,1'-Carbonyl-bis-1,2,4-triazol, 1-Methyltetrazol, 2-Methyltetrazol, 1-Methyl-5-aminotetrazol, 2-Methyl-5-aminotetrazol, 1,5-Diaminotetrazol, 1-Methyl-5-nitrotetrazol, 2-Methyl-5-nitrotetrazol, 5-Cyano-1-methyltetrazol, 5-Cyano-2-methyltetrazol, 5-Chloro-1-methyltetrazol, 5-Chloro-2-methyltetrazol, 1-Methyl-5-(1-methylhydrazinyl)tetrazol, 1,2-Bis[5-(1-methylhydrazinyl)tetrazol-1-yl]ethan, 1,2-Bis[5-(1-methylhydrazinyl)tetrazol-1-yl]propan, 1,4-Bis[5-(1-methylhydrazinyl)tetrazol-1-yl]butan, 5,5'-Bis(1-methyltetrazol), 5,5'-Bis(2-methyltetrazol), 1,2-Di(tetrazol-1-yl)propan, Tris(2-(tetrazol-1-yl)ethyl)amin, 1,1'-Bis(1-methyltetrazol-5-yl)methan, 1,2-Bis(1-methyltetrazol-5-yl)ethan, 1,2-Bis(5-aminotetrazol-1-yl)ethan, 1,3-Bis(5-aminotetrazol-1-yl)propan, 1,4-Bis(5-aminotetrazol-1-yl)butan, 2-Methyl-5-(tetrazol-1-yl)tetrazol, 1-(5-amino-1-methyl-1,2,4-triazol-3-yl)tetrazol, 5,5'-Diamino-1,1'-dimethyl-3,3'-bis(1,2,4-triazol), 1,1'-Dimethyl-3,3'-bis-1,2,4-triazol, 1,1'-Bis(2-methyltetrazol-5-yl)amin, 1-Methyl-1,1'-bis(2-methyltetrazol-5-yl)amin, 1,1'-Di(1,2,4-triazol-1-yl)methan oder 1,1'-Di(1,2,4-triazol-1-yl)methanimin ausgewählt ist.

2. Bleifreier Zündstoff oder bleifreie Zündstoffmischung nach Anspruch 1, **dadurch gekennzeichnet, dass** das Zentralmetall aus der Gruppe der 3d- oder 4d-Übergangsmetalle, bevorzugt Mangan, Eisen, Nickel, Kupfer, Zink oder Silber, ausgewählt ist.

3. Zündmittel, welches den bleifreien Zündstoff oder die bleifreie Zündstoffmischung nach einem der Ansprüche 1 bis 2 umfasst.

4. Anzündmittel, welches den bleifreien Zündstoff oder die bleifreie Zündstoffmischung nach einem der Ansprüche 1 bis 2 umfasst.

5. Verwendung von Übergangsmetallkomplexen der folgenden Formel

$$[\text{Zentralmetall}(\text{Azido})_{1-3}(\text{energetischer Ligand})_{0,5-3}]_n,$$

wobei

der energetische Ligand aus der Gruppe, bestehend aus 3-Amino-1-nitroguanidin, 4-Amino-3-hydrazino-1,2,4-triazol, 3-Hydrazino-1-methyl-1,2,4-triazol, 1-Methyl-1,2,4-triazol, 4-Methyl-1,2,4-triazol, 3-Amino-1-methyl-1,2,4-triazol, 3-Amino-2-methyl-1,2,4-triazol, 4-Amino-1,2,4-triazol, 4,4'-Bis-1,2,4-triazol, 1,1'-Carbonyl-bis-1,2,4-triazol, 1-Methyltetrazol, 2-Methyltetrazol, 1-Methyl-5-aminotetrazol, 2-Methyl-5-aminotetrazol, 1,5-Diaminotetrazol, 1-Methyl-5-nitrotetrazol, 2-Methyl-5-nitrotetrazol, 5-Cyano-1-methyltetrazol, 5-Cyano-2-methyltetrazol, 5-Chloro-1-methyltetrazol, 5-Chloro-2-methyltetrazol, 1-Methyl-5-(1-methylhydrazinyl)tetrazol, 1,2-Bis[5-(1-methylhydrazinyl)tetrazol-1-yl]ethan, 1,2-Bis[5-(1-methylhydrazinyl)tetrazol-1-yl]propan, 1,4-Bis[5-(1-methylhydrazinyl)tetrazol-1-yl]butan, 5,5'-Bis(1-methyltetrazol), 5,5'-Bis(2-methyltetrazol), 1,2-Di(tetrazol-1-yl)ethan, 1,2-Di(tetrazol-1-yl)propan,1,4-Di(tetrazol-1-yl)butan, Tris(2-(tetrazol-1-yl)ethyl)amin, 1,1'-Bis(1-methyltetrazol-5-yl)methan, 1,2-Bis(1-methyltetrazol-5-yl)ethan, 1,2-Bis(5-aminotetrazol-1-yl)ethan, 1,3-Bis(5-aminotetrazol-1-yl)propan, 1,4-Bis(5-aminotetrazol-1-yl)butan, 2-Methyl-5-(tetrazol-1-yl)tetrazol, 1-(5-amino-1-methyl-1,2,4-triazol-3-yl)tetrazol, 5,5'-Diamino-1,1'-dimethyl-3,3'-bis(1,2,4-triazol), 1,1'-Dimethyl-3,3'-bis-1,2,4-triazol, l,l'-Bis(2-methyltetrazol-5-yl)amin, 1-Methyl-1,1'-bis(2-methyltetrazol-5-yl)amin, 1,1'-Di(1,2,4-triazol-1-yl)methan oder 1,1'-Di(1,2,4-triazol-1-yl)methanimin ausgewählt ist,
als bleifreier Zündstoff,
oder
in bleifreien Zündstoffen oder bleifreien Zündstoffmischungen, in Zündmitteln, in Anzündmitteln.

6. Verwendung nach Anspruch 5, **dadurch gekennzeichnet, dass** das Zentralmetall aus der Gruppe der 3d- oder 4d-Übergangsmetalle, bevorzugt Mangan, Eisen, Nickel, Kupfer, Zink oder Silber, ausgewählt ist.

**Claims**

1. Lead-free igniter or lead-free igniter mixture comprising one or more transition metal complexes of the formula

$$[\text{central metal}(\text{azido})_{1-3}(\text{energetic ligand})_{0.5-3}]_n,$$

**characterised in that**
the energetic ligand is selected from the group consisting of 3-amino-1-nitroguanidine, 4-amino-3-hydrazino-1,2,4-triazole, 3-hydrazino-1-methyl-1,2,4-triazole, 1-methyl-1,2,4-triazole, 4-methyl-1,2,4-triazole, 3-amino-1-methyl-1,2,4-triazole, 3-amino-2-methyl-1,2,4-triazole, 4,4'-bis-1,2,4-triazole, 1,1'-carbonyl-bis-1,2,4-triazole, 1-methyltetrazole, 2-methyltetrazole, 1-methyl-5-aminotetrazole, 2-methyl-5-aminotetrazole, 1,5-diaminotetrazole, 1-methyl-5-nitrotetrazole, 2-methyl-5-nitrotetrazole, 5-cyano-1-methyltetrazole, 5-cyano-2-methyltetrazole, 5-chloro-1-methyltetrazole, 5-chloro-2-methyltetrazole, 1-methyl-5-(1-methylhydrazinyl)tetrazole, 1,2-bis[5-(1-methylhydrazinyl)tetrazol-1-yl]ethane, 1,2-bis[5-(1-methylhydrazinyl)tetrazol-1-yl]propane, 1,4-bis[5-(1-methylhydrazinyl)tetrazol-1-yl]butane, 5,5'-bis(1-methyltetrazole), 5,5'-bis(2-methyltetrazole), 1,2-di(tetrazol-1-yl)propane, tris(2-(tetrazol-1-yl)ethyl)amine, 1,1'-bis(1-methyltetrazol-5-yl)methane, 1,2-bis(1-methyltetrazol-5-yl)ethane, 1,2-bis(5-aminotetrazol-1-yl)ethane, 1,3-bis(5-aminotetrazol-1-yl)propane, 1,4-bis(5-aminotetrazol-1-yl)butane, 2-Methyl-5-(tetrazol-1-yl)tetrazol, 1-(5-amino-1-methyl-1,2,4-triazol-3-yl)tetrazol, 5,5'-Diamino-1,1'-dimethyl-3,3'-bis(1,2,4-triazol), 1,1'-Dimethyl-3,3'-bis-1,2,4-triazol, 1,1'-bis(2-methyltetrazol-5-yl)amine, 1-methyl-1,1'-bis(2-methyltetrazol-5-yl)amine, 1,1'-di(1,2,4-triazol-1-yl)methane or 1,1'-di(1,2,4-triazol-1-yl)methane imine.

2.  Lead-free igniter or lead-free igniter mixture according to claim 1, **characterized in that** the central metal is selected from the group of 3d or 4d transition metals, preferably manganese, iron, nickel, copper, zinc or silver.

3.  Ignition means comprising the lead-free igniter or the lead-free igniter mixture according to any one of claims 1 to 2.

4.  Primer comprising the lead-free igniter or the lead-free igniter mixture of any one of claims 1 to 2.

5.  Use of transition metal complexes of the following formula

$$[\text{central metal (azido)}_{1-3}(\text{energetic ligand})_{0.5-3}]_n,$$

wherein

the energetic ligand is selected from the group consisting of 3-amino-1-nitroguanidine, 4-amino-3-hydrazino-1,2,4-triazole, 3-hydrazino-1-methyl-1,2,4-triazole, 1-methyl-1,2,4-triazole, 4-methyl-1,2,4-triazole, 3-amino-1-methyl-1,2,4-triazole, 3-amino-2-methyl-1,2,4-triazole, 4-amino-1,2,4-triazole, 4,4'-bis-1,2,4-triazole, 1,1'-carbonyl-bis-1,2,4-triazole, 1-methyltetrazole, 2-methyltetrazole, 1-methyl-5-aminotetrazole, 2-methyl-5-aminotetrazole, 1,5-diaminotetrazole, 1-methyl-5-nitrotetrazole, 2-methyl-5-nitrotetrazole, 5-cyano-1-methyltetrazole, 5-cyano-2-methyltetrazole, 5-chloro-1-methyltetrazole, 5-chloro-2-methyltetrazole, 1-methyl-5-(1-methylhydrazinyl)tetrazole, 1,2-bis[5-(1-methylhydrazinyl)tetrazol-1-yl]ethane, 1,2-bis[5-(1-methylhydrazinyl)tetrazol-1-yl]propane, 1,4-bis[5-(1-methylhydrazinyl)tetrazol-1-yl]butane, 5,5'-bis(1-methyltetrazole), 5,5'-bis(2-methyltetrazole), 1,2-di(tetrazol-1-yl)ethane, 1,2-di(tetrazol-1-yl)propane, 1,4-di(tetrazol-1-yl)butane, tris(2-(tetrazol-1-yl)ethyl)amine, 1,1'-bis(1-methyltetrazol-5-yl)methane, 1,2-bis(1-methyltetrazol-5-yl)ethane, 1,2-bis(5-aminotetrazol-1-yl)ethane, 1,3-bis(5-aminotetrazol-1-yl)propane, 1,4-bis(5-aminotetrazol-1-yl)butane, 2-methyl-5-(tetrazol-1-yl)tetrazol, 1-(5-amino-1-methyl-1,2,4-triazol-3-yl)tetrazol, 5,5'-diamino-1,1'-dimethyl-3,3'-bis(1,2,4-triazole), 1,1'-dimethyl-3,3'-bis-1,2,4-triazole, 1,1'-bis(2-methyltetrazol-5-yl)amine, 1-methyl-1,1'-bis(2-methyltetrazol-5-yl)amine, 1,1'-di(1,2,4-triazol-1-yl)methane or 1,1'-di(1,2,4-triazol-1-yl)methane imine,
as a lead-free igniter,
or
in lead-free igniters or lead-free igniter mixtures, in ignitions means, in primers.

6.  Use according to claim 5, **characterized in that** the central metal is selected from the group of 3d or 4d transition metals, preferably manganese, iron, nickel, copper, zinc or silver.

**Revendications**

1.  Explosif d'amorçage sans plomb ou mélange d'explosifs d'amorçage sans plomb, comprenant un ou plusieurs complexes de métaux de transition de la formule suivante

$$[\text{métal central (azido)}_{1-3}(\text{ligand énergétique})_{0.5-3}]_n,$$

**caractérisé en ce que**
le ligand énergétique est choisi parmi le groupe constitué par 3-amino-1-nitroguanidine, 4-amino-3-hydrazino-1,2,4-triazole, 3-hydrazino-1-méthyl-1,2,4-triazole, 1-méthyl-1,2,4-triazole, 4-méthyl-1,2,4-triazole, 3-amino-1-méthyl-1,2,4-triazole, 3-amino-2-méthyl-1,2,4-triazole, 4,4'-bis-1,2,4-triazole, 1,1'-carbonyl-bis-1,2,4-triazole, 1-méthyltétrazole, 2-méthyltétrazole, 1-méthyl-5-aminotétrazole, 2-méthyl-5-aminotétrazole, 1,5-diaminotétrazole, 1-méthyl-5-nitrotétrazole, 2-méthyl-5-nitrotétrazole, 5-cyano-1-méthyltétrazole, 5-cyano-2-méthyltétrazole, 5-chloro-1-méthyltétrazole, 5-chloro-2-méthyltétrazole, 1-méthyl-5-(1-méthylhydrazinyl)tétrazole, 1,2-bis[5-(1-méthylhydrazinyl)tétrazol-1-yl]éthane, 1,2-bis[5-(1-méthylhydrazinyl)tétrazol-1-yl]propane, 1,4-bis[5-(1-méthylhydrazinyl)tétrazol-1-yl]butane, 5,5'-bis(1-méthyltétrazole), 5,5'-bis(2-méthyltétrazole), 1,2-di(tétrazol-1-yl)propane, tris(2-(tétrazol-1-yl)éthyl)amine, 1,1'-bis(1-méthyltétrazol-5-yl)méthane, 1,2-bis(1-méthyltétrazol-5-yl)éthane, 1,2-bis(5-aminotétrazol-1-yl)éthane, 1,3-bis(5-aminotétrazol-1-yl)propane, 1,4-bis(5-aminotétrazol-1-yl)butane, 2-méthyl-5-(tétrazol-1-yl)tétrazole, 1-(5-amino-1-méthyl-1,2,4-triazol-3-yl)tétrazole, 5,5'-diamino-1,1'-diméthyl-3,3'-bis(1,2,4-triazole), 1,1'-diméthyl-3,3'-bis-1,2,4-triazole, 1,1'-bis(2-méthyltétrazol-5-yl)amine, 1-méthyl-1,1'-bis(2-méthyltétrazol-5-yl)amine, 1,1'-di(1,2,4-triazol-1-yl)méthane ou 1,1'-di(1,2,4-triazol-1-yl)méthanimine.

2. Explosif d'amorçage sans plomb ou mélange d'explosifs d'amorçage sans plomb selon la revendication 1, **caractérisé en ce que** le métal central est choisi parmi le groupe des métaux de transition 3d ou 4d, de préférence le manganèse, le fer, le nickel, le cuivre, le zinc ou l'argent.

3. Moyen d'amorçage comprenant l'explosif d'amorçage sans plomb ou le mélange d'explosifs d'amorçage sans plomb selon l'une des revendications 1 à 2.

4. Moyen de mise à feu comprenant l'explosif d'amorçage sans plomb ou le mélange d'explosifs d'amorçage sans plomb selon l'une des revendications 1 à 2.

5. Utilisation de complexes de métaux de transition de la formule suivante

$$[\text{métal central (azido)}_{1\text{-}3}(\text{ligand énergétique})_{0,5\text{-}3}]n,$$

où

le ligand énergétique est choisi parmi le groupe constitué par 3-amino-1-nitroguanidine, 4-amino-3-hydrazino-1,2,4-triazole, 3-hydrazino-1-méthyl-1,2,4-triazole, 1-méthyl-1,2,4-triazole, le 4-méthyl-1,2,4-triazole, 3-amino-1-méthyl-1,2,4-triazole, 3-amino-2-méthyl-1,2,4-triazole, 4-amino-1,2,4-triazole, 4,4'-bis-1,2,4-triazole, 1,1'-carbonyl-bis-1,2,4-triazole, 1-méthyltétrazole, 2-méthyltétrazole, 1-méthyl-5-aminotétrazole, 2-méthyl-5-aminotétrazole, 1,5-diaminotétrazole, 1-méthyl-5-nitrotétrazole, 2-méthyl-5-nitrotétrazole, 5-cyano-1-méthyltétrazole, 5-cyano-2-méthyltétrazole, 5-chloro-1-méthyltétrazole, 5-chloro-2-méthyltétrazole, 1-méthyl-5-(1-méthylhydrazinyl)tétrazole, 1,2-bis[5-(1-méthylhydrazinyl)tétrazol-1-yl]éthane, 1,2-bis[5-(1-méthylhydrazinyl)tétrazol-1-yl]propane, 1,4-bis[5-(1-méthylhydrazinyl)tétrazol-1-yl]butane, 5,5'-bis(1-méthyltétrazole), 5,5'-bis(2-méthyltétrazole), 1,2-di(tétrazol-1-yl)éthane, 1,2-di(tétrazol-1-yl)propane, 1,4-di(tétrazol-1-yl)butane, tris(2-(tétrazol-1-yl)éthyl)amine, 1,1'-bis(1-méthyltétrazol-5-yl)méthane, 1,2-bis(1-méthyltétrazol-5-yl)éthane, 1,2-bis(5-aminotétrazol-1-yl)éthane, 1,3-bis(5-aminotétrazol-1-yl)propane, 1,4-bis(5-aminotétrazol-1-yl)butane, 2-méthyl-5-(tétrazol-1-yl)tétrazole, 1-(5-amino-1-méthyl-1,2,4-triazol-3-yl)tétrazole, 5,5'-diamino-1,1'-diméthyl-3,3'-bis(1,2,4-triazole), 1,1'-diméthyl-3,3'-bis-1,2,4-triazole, 1,1'-bis(2-méthyltétrazol-5-yl)amine, 1-méthyl-1,1'-bis(2-méthyltétrazol-5-yl)amine, 1,1'-di(1,2,4-triazol-1-yl)méthane ou 1,1'-di(1,2,4-triazol-1-yl)méthanimine,
comme explosif d'amorçage sans plomb,
ou
dans des explosifs d'amorçage sans plomb ou des mélanges d'explosifs d'amorçage sans plomb, dans des moyens d'amorçage, dans des moyens de mise à feu.

6. Utilisation selon la revendication 5, **caractérisée en ce que** le métal central est choisi parmi le groupe des métaux de transition 3d ou 4d, de préférence le manganèse, le fer, le nickel, le cuivre, le zinc ou l'argent.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008200688 A1
- EP 2450329 A2
- EP 2450330 A2
- WO 2015067228 A1

**In der Beschreibung aufgeführte Nicht-Patentliteratur**

- **PEI LIU et al.** Toward Tuning the Bulk Magnetic Behaviors of Metal-Azido Materials by Organic Pillars. *Chem. Mater.,* 2007, vol. 19, 2724-2726
- **PEI LIU et al.** upporting Information - Towards tuning the bulk magnetic behaviors of metal-azido materials by Organic Pillars. *Chem. Mater.,* 2007, vol. 19, 2724-2726
- **JIA-CHENG LIU et al.** Linear trinuclear and one-dimensional copper (II) complexes containing co-bridging end- on azido and triazole ligands. Crystal structures and magnetic properties of [Cu3(atrz)2(N3)6] and [Cu(atrz)2(N3)]NO3 (atrz = 4-amino-1,2,4-triazole). *J. Chem. Soc, Dalton trans.,* 1999, 2337-2342